# EUROPÄISCHE PATENTSCHRIFT

(11) **EP 1 225 828 B1**
(45) Veröffentlichungstag und Bekanntmachung des Hinweises auf die Patenterteilung: **04.07.2007**
(21) Anmeldenummer: 00965999.6
(22) Anmeldetag: 14.09.2000
(51) Int. Cl.: A47L 9/28

(54) **STAUBSAUGER, INSBESONDERE BODENSTAUBSAUGER MIT BEDIENELEMENTEN ZUR ELEKTRISCHEN LEISTUNGSSTEUERUNG DES SAUGGEBLÄSES**
VACUUM CLEANER, ESPECIALLY FLOOR-TYPE VACUUM CLEANER WITH OPERATING ELEMENTS FOR ELECTRICALLY CONTROLLING THE POWER OF THE ASPIRATOR
ASPIRATEUR, NOTAMMENT ASPIRATEUR-TRAINEAU, COMPORTANT DES ELEMENTS SERVANT A COMMANDER LA PUISSANCE ELECTRIQUE DU DISPOSITIF D'ASPIRATION

(30) Priorität: 05.10.1999 DE 19947980
(43) Veröffentlichungstag der Anmeldung: 31.07.2002
(73) Patentinhaber: Miele & Cie. KG, 33332 Gütersloh (DE)
(72) Erfinder: BARTSCH, Klaus, 33611 Bielefeld (DE); SCHMEDT, Andreas, 33428 Harsewinkel (DE); UDO, Mersmann, 33335 Gütersloh (DE); STEINKÖTTER, Heinz-Günter, 33739 Bielefeld (DE)
(86) Internationale Anmeldenummer: PCT/EP2000/008962
(87) Internationale Veröffentlichungsnummer: WO 2001/024678

(56) Entgegenhaltungen:
- DE-A- 3 603 176
- DE-A- 4 426 634
- DE-A- 19 801 468
- DE-U- 9 309 493

## Beschreibung

Der Gegenstand der Erfindung betrifft einen Staubsauger, insbesondere einen Bodenstaubsauger mit einem Gebläseraum im Gerätegehäuse zur Aufnahme eines Sauggebläses sowie mit Bedienelementen am Gehäuse zur elektrischen Leistungssteuerung des Sauggebläses, wobei die zu einer Baugruppe zusammengefaßten Bedienelemente über dem Gebläseraum angeordnet sind, in welchem auch die Steuerelektronik für das Sauggebläse untergebracht ist.

Derartige Staubsauger (vgl. DE 36 03 176 A1) bestehen aus einem die Baugruppe mit den Bedienelementen aufweisenden Gehäuseoberteil sowie aus einem Unterteil, welches durch Trennwände in einen Staubsammelraum für den Staubfilterbeutel, den Gebläseraum und einen Gehäuseraum für eine Kabeltrommel unterteilt ist Das aufgesetzte Gehäuseoberteil überdeckt dabei die Trennwände luftdicht, wobei ein am Gehäuseoberteil angelenkter Deckel seinerseits den Staubsammelraum dicht abschließt. Hierbei ist es bekannt, die Bedienelemente zur Drehzahlsteuerung und/oder zum Ein- und Ausschalten des Gerätes ebenso wie die Schalttaste für den Kabelwickler zu einer Baugruppe zusammengefaßt oberseitig im Staubsaugergehäuse über dem Gehäuseraum des Sauggebläses anzuordnen. Dabei sind zumindest die seitlich eines mittleren Bedienteils der Baugruppe angeordneten Schalttasten als Fuß-Trittschalter großflächig ausgebildet und wippenartig am Mittelteil gelagert Das Mittelteil nimmt im wesentlichen die manuellen Dreh- oder Stellmittel zur Leistungsverstellung des Sauggebläses auf, welches seinerseits über die im Gebläseraum angeordnete Steuerelektronik (vgl. DE 44 26 634 A1) angesteuert wird. Bekannt ist auch die Anordnung der Steuerelektronik außerhalb des Gebläseraumes im Gerätegehäuse (vgl. DE-GM 74 08 275). Die Steuerelektronik ist dabei auf einer Leiterkarte oder Platine installiert. Ferner beschreibt die DE 93 09 493 einen Staubsauger mit einer Tragplatte, die an einer Kabeltrommel angesteckt wird, wobei eine elektrische Verbindung hergestellt wird. Die Tragplatte umfaßt ebenfalls die notwendigen Bauelemente zur Steuerung des Motors.

Bei den bekannten Ausführungsformen besteht ein wesentlicher Nachteil darin, daß die elektrische Verbindung zwischen der Leiterkarte für die Steuerelektronik, die im Gehäuseinneren angeordnet ist, und den elektrischen Schalt- und Leistungsstellern sowie optischen Anzeigen auf den außerhalb des Motorraumes installierten Bedienelementen des Staubsaugers durch separate Leitungsverbindungen manuell und zeitraubend vorgenommen werden muß. Die manuelle zeitraubende Verdrahtung kompliziert den Montage- und Fertigungsablauf des Gerätes und kann bei nicht speziell geschultem Personal zu Verdrahtungsfehlem führen. Dies trifft insbesondere dann zu, wenn länderspezifische bzw. vom jeweiligen Gerätetyp abhängige Varianten bei den Bedienelementen vorkommen. Ferner können sich Undichtheiten zwischen den Gehäuseteilen bei den Leitungsdurchführungen ergeben. Außerdem ist es aufgrund enger Einbauverhältnisse für das Sauggebläse bzw. für die baugruppenmäßig zusammengefaßten Bedienelemente vielfach ein Problem, die Steuerelektronik mit ihren Leistungsschaltern und zugeordneten Kühlflächen so anzuordnen, daß eine ausreichende Bauteilekühlung erreicht wird. Beim vorstehend erwähnten Technikstand (DE-GM 74 08 275), bei welchem die Schaltplatine mit den Elementen zur Leistungssteuerung (Triac usw.) in einer eigenen Kammer des Staubsaugergehäuses angeordnet ist, wobei die Kammerwände mit Lüftungsschlitzen zur Außenluft ausgestattet sind, ist eine ausreichende Kühlung der Leistungselektronik nur dadurch möglich, weil der Kühlkörper des Leistungsschalters übermäßig groß bemessen ist. Hierfür fehlt bei den heutigen kompakten kleinen Staubsaugern jedoch der notwendige Platz. Daneben besteht weiterhin das Problem einer zeitaufwendigen Verdrahtung der Staubsaugerelektronik mit den Bedienelementen.

Der Erfindung liegt die Aufgabe zugrunde, bei einem Staubsauger der eingangs genannten Art die Leitungs- und Litzenverdrahtung zwischen der Steuerelektronik und den in einer Baugruppe zusammengefaßten und separat von der Elektronik installierten Bedienelementen zu optimieren, um einerseits den Montageaufwand herabzusetzen und andererseits Kühlprobleme bei den Leistungsschaltern sowie Gehäuseundichtheiten durch eine kammerübergreifende Leitungsverlegung zu vermeiden. Daneben soll ein einheitliches Verdrahtungsprinzip für verschiedene Gerätevarianten einer Serienbaugruppe geschaffen werden, wobei die jeweils montierten Bedienelemente typbestimmend sind und Verdrahtungsfehler vermieden werden.

Erfindungsgemäß wird diese Aufgabe mit den Merkmalen des Patentanspruchs 1 gelöst. Vorteilhafte Ausgestaltungen und Weiterbildungen der Erfindung ergeben sich aus den nachfolgenden Unteransprüchen.

Ein Ausführungsbeispiel der Erfindung ist in den Zeichnungen rein schematisch dargestellt und wird nachfolgend näher beschrieben. Es zeigen
- Figur 1: einen Bodenstaubsauger mit Bedienelementen am hinteren Gerätegehäuse in der Draufsicht,
- Figur 2: den Staubsauger gemäß Fig. 1 in einem Teilausschnitt in vergrößerter Draufsicht ohne Bedienelemente,
- Figur 3: die Bedienelemente des Staubsaugers in der Ansicht von unten,
- Figur 4: ein mit den Bedienelementen verbindbares Trägerelement und
- Figur 5: einen Querschnitt durch das Gerätegehäuse des Bodenstaubsaugers im Bereich der Bedienelemente.

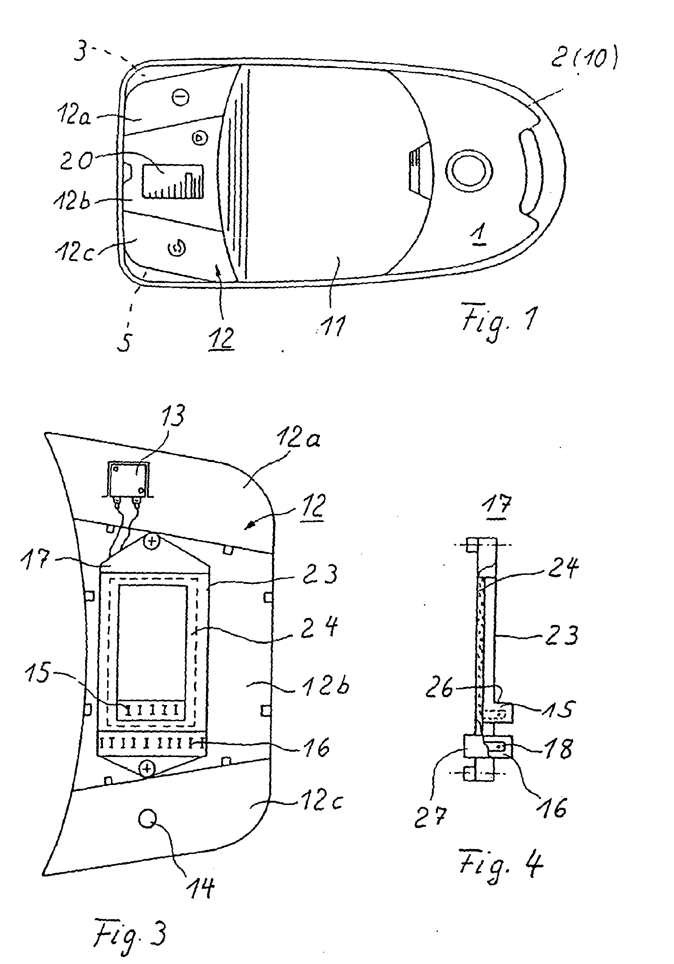

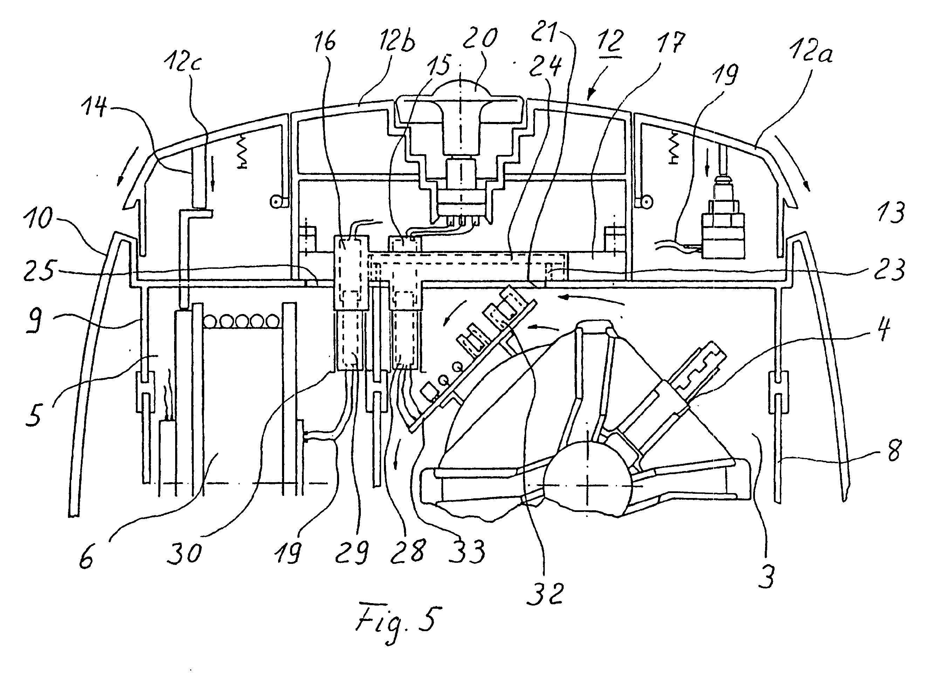

Ein in Fig. 1 in der Draufsicht gezeigter Bodenstaubsauger (1) besitzt ein Gerätegehäuse (2), welches in an sich bekannter Weise (sh. Fig. 2) in einen Gebläseraum (3) für das Sauggebläse (4), einen Raum (5) für eine das Anschlußkabel des Gerätes aufnehmende Kabeltrommel (6) sowie in einen Staubsammelraum (7) zur Aufnahme eines nicht gezeigten Staubfilterbeutels unterteilt ist. Das Gerätegehäuse (2) besteht gemäß Fig. 5 aus einem Unterteil (8) mit Trennwänden (9) für die vorgenannten Räume und aus einem mit dem Unterteil (8) in an sich bekannter Weise dicht und lösbar verbundenen Gehäuseoberteil (10).

Gemäß Fig. 1, 2 und 3 sind im abschließenden Gehäuseoberteil (10), welches über dem Staubsammelraum (7) mit einem aufklappbaren Gehäusedeckel (11) zum Wechseln des nicht gezeigten Staubfilterbeutels versehen ist, oberhalb des Gebläseraumes (3) die Bedienelemente (12; 12a, 12b. 12c) zum Ein- und Ausschalten (12a) des Staubsaugers (1), zur Leistungssteuerung (12b) und zum Auf- und Abwickeln (12c) des Zuleitungskabels installiert. Die drei Bedienelemente (12) sind zu einer Baugruppe zusammengefaßt und erstrecken sich gemeinsam über die Breite des Gerätegehäuses (2). Die Baugruppe mit den Bedienelementen (12) besteht aus einem separaten Mittelteil (12b), der den Leistungssteller (20) sowie ggf. Kontrollanzeigen usw. trägt, sowie beiderseits am Mittelteil (12b) wippenartig (sh. Pfeile, Fig. 5) gelagerten Schalttasten (12a, 12c), die jeweils als Fußtrittschalter ausgebildet sind. Einer dieser Trittschalter dient zum Ein-/Ausschalten des Gerätes und weist dafür unterseitig eine entsprechende Schalteinrichtung (13), z. B. einen Mikroschalter auf. Die zweite Taste löst über ein angeformtes Betätigungsglied (14) bei Betätigung die Bremse der Kabeltrommel (6).

Unterseitig am mittleren Bedienelement (12b) der Baugruppe ist gemäß Fig. 3, 4 und 5 erfindungsgemäß ein mit Steckerleisten (15, 16) bestücktes Trägerelement (17) lösbar verbunden, welches ggf. auch Träger einer Geräteelektronik sein kann. Die oberseitigen gehäuseraumfernen Kontaktbuchsen (18), sh. Fig. 2 und 5, der Steckerleisten (15, 16) sind über aufgesteckte Leitungsbrücken (19) mit dem Drehzahlsteller oder Leistungswahlschalter (20), den separaten Anzeige- und Kontrollelementen sowie dem Ein-/Ausschalter (13) der Bedienelementen-Baugruppe des Staubsaugers (1) verbunden.

Ferner ist gemäß der Erfindung das Gehäuseoberteil (10) im Bereich des Gebläseraumes (3) in Form einer definierten Gehäuseöffnung (21) durchbrochen, deren oberer Öffnungsrand (22), sh. Fig. 2 und 5, umlaufend stegartig ausgebildet ist. Diese Gehäuseöffnung (21) wird vom auf gesetzten Trägerelement (17) dicht überdeckt, welches dafür deckelähnlich mit einem umlaufenden Randansatz (23), sh. Fig. 3, 4 und 5, gestaltet ist. Im Randansatz (23) ist eine Dichtung (24) ausgebildet, welche sich bei aufgesetztem Trägerelement (17) gegen den stegartigen Öffnungsrand (22) der Gehäuseöffnung (21) preßt. Das Trägerelement (17) deckt ferner eine zweite Öffnung (25), sh. Fig. 2 und 5. zum Raum (5) für die Kabeltrommel (6) undicht ab. Die Fig. 3 zeigt die vom Staubsauger (1) abgenommenen Bedienelemente (12) des Bodenstaubsaugers in der Ansicht von unten mit der Anordnung des Trägerelements (17) am mittleren Bedienelement (12b).

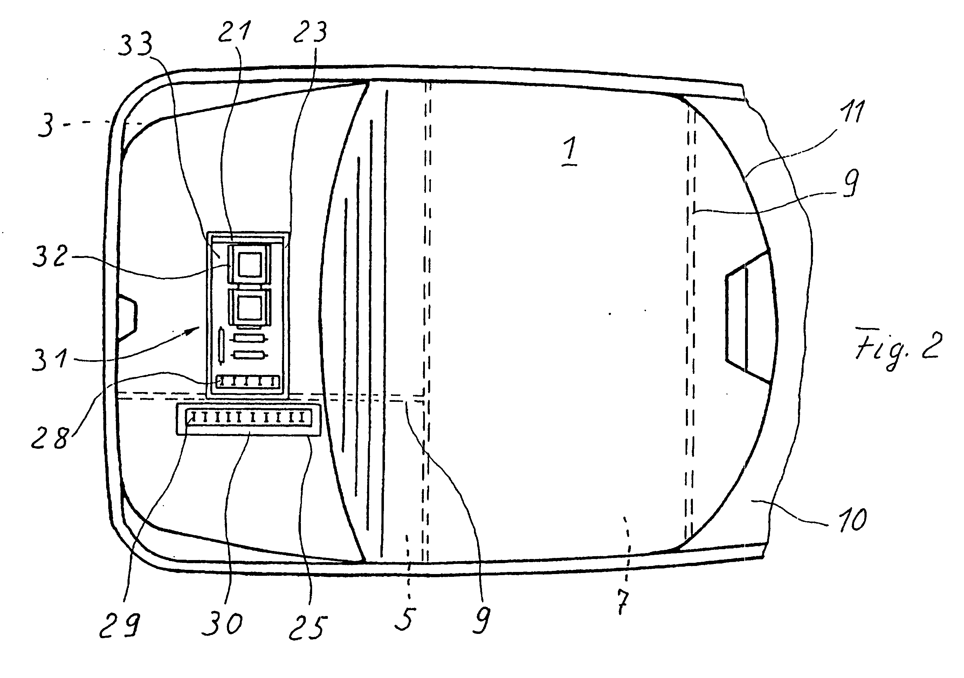

Die Steckerleisten (15, 16) sind am Trägerelement (17) jeweils in angeformten Steckerhaltern (26, 27), sh. Fig. 4, eingesetzt und mit den Haltern dicht vergossen oder in diese eingespritzt. Den Steckerleisten (15, 16) gegenüberliegend sind gemäß Fig. 5 Steckverbinder (28, 29) im Unterteil (8) des Gerätegehäuses (2) zugeordnet, welche lösbar in separaten Haltern (30) im Gebläseraum (3) und im Raum (5) für die Kabeltrommel (6) angeordnet sind. Die Steckverbinder (28, 29) sind über die beiden Gehäuseöffnungen (21, 25) zugänglich und einsehbar, wobei die mit den Steckerleisten (15, 16) korrespondierenden Steckverbinder (28. 29) ihrerseits mit der geräteinternen Leistungselektronik (Steuerelektronik 31) bzw. deren Bauteile, mit dem Sauggebläse (4), dem Anschlußkabel der Kabeltrommel (6) sowie mit ggf. weiterem elektrischen Zubehör im Innern des Bodenstaubsaugers (1) leitungsverbunden sind.

Die Sauggebläse-Steuerelektronik (31) mit den Kühlkörpern (32) für die Leistungsschalter der Drehzahlsteuerung ist erfindungsgemäß im Bereich der Gehäuseöffnung (21) des Gebläseraumes (3) bei gezogenen Steckern weitestgehend freiliegend und auch kontrollierbar (Fig. 2) angeordnet. Bei dicht auf die Gehäuseöffnung (21) aufgesetztem Trägerelement (17), Fig. 5. wird die Elektronik vom Gebläseabluftstrom (sh. Pfeile, Fig. 5) voll erfaßt und ausreichend gekühlt. Die Steuerelektronik (31) ist in der Nähe der Gehäuseöffnung (21) auf einer vorzugsweise am Sauggebläse (4) lösbar montierten Platine (33) oder Leiterkarte verlötet. Zumindest die Kühlflächen oder Kühlkörper (32) der Leistungsschalter sind direkt im Abluftstrom des Sauggebläses (4) angeordnet.

Bei der gezeigten Ausführungsart ist vorgesehen, daß eine Steckerleiste (15) durch die Öffnung (21) in den Gebläseraum (3) (Überdruckraum) und die andere Steckerleiste (16) links neben der Trennwand (9) des Gebläseraumes (3) über die zweite Öffnung (25) im Gehäuseoberteil (10) in den Raum (5) der Kabeltrommel (6) eintaucht, welcher in an sich bekannter Weise mit der Außenluft in Verbindung steht. Die weitere Öffnung (25) wird vom Trägerelement (17) überdeckt, jedoch nicht durch das Element abgedichtet. Nur die in den Gebläseraum (3) eintauchende Steckerleiste (15) ist innerhalb des von der Dichtung (24) umgebenden Deckelbereichs des Trägerelements (17) angeordnet und nach außen hin abgedichtet.

Die Baugruppe mit den Bedienelementen (12; 12a bis 12c) ist auswechselbar am Gehäuseoberteil (10) befestigt, wobei die Baugruppenelemente vorzugsweise durch lösbare Klemm-Rastverbindungen untereinander verbunden sind. Die als Tritt- oder Schalttasten ausgebildeten Bedienelemente (12) sind am gemeinsamen Mittelteil (12b) der Baugruppe wie erwähnt wippenartig verrastet, wobei das mit dem Trägerelement (17) verbundene Mittelteilteil (12b) je nach Gerätetyp unterschiedliche Drehzahlsteller, Anzeigelampen und dergl. sowie ggf. auch noch Elektronikbauteile tragen kann.

Die Erfindung gestattet vorteilhaft eine Optimierung der Verdrahtung insbesondere von Bodenstaubsaugern, deren Bedienelemente jeweils zu einer Baugruppe zusammengefaßt sind. Das erfindungsgemäß in die Baueinheit (Mittelteil) der Bedienelemente integrierte Trägerelement (17) für Elektronik- sowie Steckerbauteile ermöglicht einfach und sicher eine steckbare Kopplung der gehäuseintemen separaten Motorelektronik mit der außerhalb der Gehäuseräume liegenden Kappen- bzw. Bedienteileelektronik, wodurch Verdrahtungsfehler bei der Montage nicht mehr auftreten können. Das Trägerteil (17) als separater Steckerverbinder schafft ferner die einfache Möglichkeit einer kontrollierbaren Unterbringung der Leistungsschalter bzw. derer Kühlfahnen (32) direkt im Luftstrom des Sauggebläses (4). Ebenfalls sind Gehäuseundichtheiten nicht mehr gegeben, da eine separate Leitungsverlegung durch die Kammertrennwände von Gebläse- und Kabeltrommelraum hindurch aufgrund der Steckerlösung nicht mehr erfolgen muß. Auch treten Kühlprobleme bei den Leistungsschaltern durch die direkte Beaufschlagung der Bauelemente mit dem Gebläseluftstrom nicht mehr auf.

Gemäß einer vorteilhaften nicht näher gezeigten Weiterbildung der Erfindung kann die Steuerelektronik mit den Leistungsschaltern sowie deren zugeordnete Kühlflächen (32) und dergl. bzw. die Drehzahlsteuerung des Staubsaugers auch insgesamt am Trägerteil (17) vorgesehen werden. Bei dieser Variante sind beispielsweise die elektrischen Bauteile für die Leistungssteuerung auf einer separaten Leiterkarte über der Öffnung zum Gebläseraum (3) am Trägerelement (17) anzuordnen, wobei zumindest die im Betrieb zu kühlenden elektronischen Leistungsschalter mit ihren Kühlflächen bei montiertem Trägerelement (17) bzw. Baugruppenmittelteil soweit in die Gebläseraumöffnung (21) eintauchen, daß sie von der Gebläseluft optimal beaufschlagt werden. Um die Dichtwirkung der Trägerplatte zu gewährleisten ist es dabei ggf. notwendig, die elektronischen Bauteile in das Trägerelement (17) einzuspritzen und an den eingespritzten Bauteilen die Platine oder Leiterkarte aufzulöten. Alternativ zu einem direkt eingespritzten Leistungsschalter (Triac) mit Kühlkörper ist es auch denkbar, nur den Kühlkörper und zwei Kontakte einzuspritzen. Der Triac wird dann am Kühlkörper befestigt und anschließend an den Kontakten verlötet.

Auch die Verlegung der Steuerelektronik des Staubsaugers in die Baugruppe der Bedienelemente (12) bietet die Möglichkeit einer variablen Gerätetypgestaltung. Insbesondere kann für die Geräte einer Baureihe ein mit ggf. gleicher Steuerelektronik (31) gleichbleibendes Verdrahtungsprinzip gewählt werden, wobei der jeweilige Gerätetyp durch die aufgesetzte Bedientastenkombination bestimmt wird. Für unterschiedliche Staubsauger-Baureihen können vorteilhaft gieichbreite und gleichgroße Mittelteile (12b) mit gleichbreiten großen oder kleineren Schalttasten (12a, 12c) kombiniert werden, wobei die Elektronik des Mittelteils (12b) den Typ bestimmt.

## Patentansprüche

1. Staubsauger, insbesondere Bodenstaubsauger mit einem Gebläseraum im Gerätegehäuse zur Aufnahme eines Sauggebläses sowie mit Bedienelementen am Gehäuse zur elektrischen Leistungssteuerung des Sauggebläses, wobei die zu einer Baugruppe zusammengefaßten Bedienelemente über dem Gebläseraum angeordnet sind, in weichem auch die Steuerelektronik für das Sauggebläse untergebracht ist,
**dadurch gekennzeichnet,**
**daß** die Baugruppe mit den Bedienelementen (12; 12a bis 12c) aus einem mit der Steuerelektronik (31) des Staubsaugers (1) verbindbaren Mittelteil (12b) für die Unterbringung von Leistungsstellern (20) und/oder Anzeigeelementen und wenigstens einer am Mittelteil (12b) gelagerten Schalttaste (12a, 12c) zum Ein- und Ausschalten des Sauggebläsemotors besteht,
**daß** unterseitig am Mittelteil (12b) ein mit Steckerleisten (15, 16) und ggf. weiteren elektrischen Bauteilen zur Leistungssteuerung bestücktes Trägerelement (17) angeordnet ist, wobei die Steckerleisten (15, 16) eine Leitungsverbindung zu den elektrischen Bauelementen der Bedienelemente (12) herstellen,
**daß** das Trägerelement (17) zumindest eine Gehäuseöffnung (21) im Gehäuseoberteil (10) des Staubsaugers (1) zum Gebläseraum (3) hin dicht überdeckt, in deren Bereich die Steuerelektronik (31) mit den Kühlkörpern (32) ihrer Leistungsschalter vom Gebläseabluftstrom gekühlt angeordnet ist, und daß korrespondierende Steckverbinder (28, 29) zu den Stecker leisten (15, 16) im Gerätegehäuse (2) angeordnet sind, welche die Leitungsverbindung zur Steuerelektronik (31), zum Sauggebläse (4), zur Kabeltrommel und dergl. innerhalb des Gerätegehäuses (2) herstellen.

2. Staubsauger nach Anspruch 1,
**dadurch gekennzeichnet,**
**daß** das Trägerelement (17) zur Überdeckung und Abdichtung der Gehäuseöffnung (21) zum Gebläseraum (3) mit einem deckelähnlich gestalteten Randansatz (23) mit umlaufender Dichtung (24) ausgebildet ist.

3. Staubsauger nach Anspruch 1 und 2,
**dadurch gekennzeichnet,**
**daß** die Steckerleisten (15, 16) am Trägerelement (17) in angeformten in die Öffnungen (21, 25) eintauchenden Steckerhaltern (26, 27) eingesetzt sind, wobei zumindest die in den Gebläseraum (3) eintauchende Steckerleiste (15) sowie ggf. weitere zu kühlende elektrische Bauteile des Trägerelements (17) innerhalb des von der Dichtung (24) umschlossenen Deckelbereichs angeordnet sind.

4. Staubsauger nach einem oder mehreren der Ansprüche 1 bis 3,
**dadurch gekennzeichnet,**
**daß** die Steckerleisten (15, 16) in den Steckerhaltern (26, 27) unlösbar dicht eingefügt sind.

5. Staubsauger nach einem oder mehreren der Ansprüche 1 bis 4,
**dadurch gekennzeichnet,**
**daß** die Steckerleisten (15, 16) in die Steckerhalter (26, 27) eingespritzt sind.

6. Staubsauger nach einem oder mehreren der Ansprüche 1 bis 5,
**dadurch gekennzeichnet,**
**daß** die Steckverbinder (28, 29) den Steckerleisten (15, 16) gegenüberliegend lösbar in separaten Haltern (30) des Gebläseraumes (3) und des Raumes (5) für die Kabeltrommel (6) angeordnet sind.

7. Staubsauger nach einem oder mehreren der Ansprüche 1 bis 6,
**dadurch gekennzeichnet,**
**daß** die Steuerelektronik (31) auf einer am Sauggebläse (4) lösbar montierten Leiterkate (33) angeordnet ist, wobei zumindest die Kühlflächen (32) der Leistungsschalter unmittelbar im Abluftstrom des Sauggebläses (4) angeordnet sind.

8. Staubsauger nach einem oder mehreren der Ansprüche 1 bis 7,
**dadurch gekennzeichnet,**
**daß** für ggf. weitere am Mittelteil (12b) vorgesehene elektrische Bauteile eine separate Leiterkarte über der Öffnung (21) zum Gebläseraum (3) am Trägerelement (17) angeordnet ist.

9. Staubsauger nach einem oder mehreren der Ansprüche 1 bis 8,
**dadurch gekennzeichnet,**
**daß** die weiteren Bauteile in das Trägerelement (17) eingespritzt sind.

10. Staubsauger nach einem oder mehreren der Ansprüche 1 bis 9,
**dadurch gekennzeichnet,**
**daß** das Gerätegehäuse (2) des Staubsaugers (1) aus einem die Baugruppe mit den Bedienelementen (12) aufweisenden Gehäuseoberteil (10) sowie aus einem Unterteil (8) besteht, welches durch Trennwände (9) in den Staubsammelraum (7) für den Staubfilterbeutel, den Gebläseraum (3) und den Raum (5) für die Kabeltrommel (6) unterteilt ist, wobei das aufgesetzte Gehäuseoberteil (10) die Trennwände (9) dicht überdeckt und mit den Gehäuseöffnungen (21, 25) für die Steckerleisten (15, 16) ausgebildet ist.

11. Staubsauger nach einem oder mehreren der Ansprüche 1 bis 10,
**dadurch gekennzeichnet,**
**daß** die Baugruppe mit den Bedienelementen (12; 12a, 12b, 12c) auswechselbar am Gehäuseoberteil (10) befestigt ist .

12. Staubsauger nach einem oder mehreren der Ansprüche 1 bis 11,
**dadurch gekennzeichnet,**
**daß** die als Schalttasten ausgebildeten Bedienelemente (12) mit dem gemeinsamen Mittelteil (12b) der Baugruppe wippenartig verrastet sind.

13. Staubsauger nach einem oder mehreren der Ansprüche 1 bis 12,
**dadurch gekennzeichnet,**
**daß** das mit dem Trägerelement (17) verbundene Mittelteilteil (12b) hinsichtlich einer Gerätetypvariation mit unterschiedlichen elektrischen Bauteilen und/oder Drehzahlstellmitteln (20), Anzeigeelementen und dergl. bestückt ist.

14. Staubsauger nach einem oder mehreren der Ansprüche 1 bis 13,
**dadurch gekennzeichnet,**
**daß** gleichbreite und gleichgroße Mittelteile (12b) mit gleichbreiten großen oder kleineren Schalttasten (12a, 12c) für unterschiedliche Staubsauger-Baureihen kombinierbar sind.

15. Staubsauger nach einem oder mehreren der Ansprüche 1 bis 14,
**dadurch gekennzeichnet,**
**daß** die Steuerelektronik (31) mit/ohne Leistungsste!ter (20) am Trägerelement (17) angeordnet ist, und daß die Kühlfahnen (32) der Leistungsschalter bei montiertem Trägerelement (17) durch die Gehäuseöffnung (21) in den Gebläseabluftstrom des Sauggebläses (4) eintauchen.

## Claims

1. Vacuum cleaner, more especially a floor-type vacuum cleaner having a fan chamber in the appliance housing for the accommodation of a suction fan as well as control elements on the housing for the control of the electric output of the suction fan, wherein the control elements that are combined to form one assembly are disposed above the fan chamber, in which the control electronics for the suction fan are also accommodated, **characterised in that** the assembly with the control elements (12; 12a to 12c) comprises a central portion (12b), which is connectable to the control electronics (31) of the vacuum cleaner (1) and is for the accommodation of output adjusting means (20) and/or display elements, and at least one switch (12a, 12c) that is mounted on the central portion (12b) for switching the suction fan motor on and off, **in that** a support element (17), which is provided with plug strips (15, 16) and, where applicable, with additional electric components for controlling the output, is disposed on the underside of the central portion (12b), wherein the plug strips (15, 16) produce a line connection to the electric components of the control elements (12), **in that** the support element (17) covers at least one housing opening (21) in the housing upper portion (10) of the vacuum cleaner (1) so as to provide a seal relative to the fan chamber (3), in the region of which opening the control electronics (31) with the cooling bodies (32) of its power switches is disposed so as to be cooled by the fan exhaust air flow, and **in that** plug-in connectors (28, 29) corresponding to the plug strips (15, 16) are disposed in the appliance housing (2), which plug-in connectors produce the line connection to the control electronics (31), to the suction fan (4), to the cable drum and similar internally of the appliance housing (2).

2. Vacuum cleaner according to claim 1, **characterised in that** the support element (17) is configured with an edge projection (23) that is developed so as to be cover-like with a circumferential seal (24) for covering and sealing the housing opening (21) to the fan chamber (3).

3. Vacuum cleaner according to claim 1 and 2, **characterised in that** the plug strips (15, 16) are inserted on the support element (17) into integrally moulded plug holders (26, 27) that extend into the openings (21, 25), wherein at least the plug strip (15) that extends into the fan chamber (3) as well as, where applicable, additional electrical components of the support element (17) that are to be cooled are disposed internally of the cover region that is surrounded by the seal (24).

4. Vacuum cleaner according to one or more of claims 1 to 3, **characterised in that** the plug strips (15, 16) are inserted into the plug holders (26, 27) in a non-detachable, sealing manner.

5. Vacuum cleaner according to one or more of claims 1 to 4, **characterised in that** the plug strips (15, 16) are injected into the plug holders (26, 27).

6. Vacuum cleaner according to one or more of claims 1 to 5, **characterised in that** the plug connectors (28, 29) are disposed so as to be detachable opposite the plug strips (15, 16) in separate holders (30) of the fan chamber (3) and of the space (5) for the cable drum (6).

7. Vacuum holder according to one or more of claims 1 to 6, **characterised in that** the control electronics (31) are disposed on a printed circuit board (33) that is mounted on the suction fan (4) so as to be removable, wherein at least the cooling faces (32) of the power switches are disposed directly in the exhaust air flow of the suction fan (4).

8. Vacuum cleaner according to one or more of claims 1 to 7, **characterised in that** for additional electric components that are provided, where applicable, on the central part (12b), a separate printed circuit board is disposed above the opening (21) to the fan chamber (3) on the support element (17).

9. Vacuum cleaner according to one or more of claims 1 to 8, **characterised in that** the additional components are injected into the support element (17).

10. Vacuum cleaner according to one or more claims 1 to 9, **characterised in that** the appliance housing (2) of the vacuum cleaner (1) comprises a housing upper portion (10), which includes the assembly with the control elements (12), as well as a lower portion (8), which is divided by means of partition walls (9) into the dust collecting chamber (7) for the dust filter bag, the fan chamber (3) and the space (5) for the cable drum (6), wherein the housing upper portion (10), when placed in position, covers the partition walls (9) in a sealing manner and is configured with the housing openings (21, 25) for the plug strips (15, 16).

11. Vacuum cleaner according to one or more of claims 1 to 10, **characterised in that** the assembly with the control elements (12; 12a, 12b, 12c) is secured to the housing upper portion (10) so as to be interchangeable.

12. Vacuum cleaner according to one or more of claims 1 to 11, **characterised in that** the control elements (12), which are in the form of switches, are locked to the common central portion (12b) of the assembly so as to rock.

13. Vacuum cleaner according to one or more of claims 1 to 12, **characterised in that** the central portion (12b), which is connected to the support element (17), is provided with different electric components and/or speed adjusting means (20), display elements and similar with regard to a variation in the design of the appliance.

14. Vacuum cleaner according to one or more of claims 1 to 13, **characterised in that** central portions (12b) of identical width and identical size are combinable with large or smaller switches (12a, 12c) of identical width for different series of vacuum cleaner.

15. Vacuum cleaner according to one or more of claims 1 to 14, **characterised in that** the control electronics (31) is disposed on the support element (17) with/without output adjusting means (20), and **in that**, with the support element (17) in the mounted position, the cooling vanes (32) of the power switches extend through the housing opening (21) into the fan exhaust air flow of the suction fan (4).

## Revendications

1. Aspirateur, en particulier aspirateur-traîneau, avec un compartiment de ventilateur dans le boîtier d'appareil pour la réception d'un ventilateur aspirant ainsi qu'avec des éléments de commande sur le boîtier pour la commande de puissance électrique du ventilateur aspirant, les éléments de commande regroupés en un sous-ensemble étant disposés au-dessus du compartiment de ventilateur dans lequel est aussi logée l'électronique de commande pour le ventilateur aspirant,
**caractérisé en ce**
**que** le sous-ensemble comprenant les éléments de commande (12 ; 12a à 12c) se compose d'une pièce centrale (12b) pouvant être reliée à l'électronique de commande (31) de l'aspirateur (1) et servant à héberger des organes de réglage de puissance (20) et/ou des éléments d'affichage, et d'au moins une touche de commande (12a, 12c) montée sur la pièce centrale (12b) pour mettre en marche et arrêter le moteur de ventilateur aspirant,
**qu'**un élément porteur (17) équipé de barrettes à fiches (15, 16) et le cas échéant d'autres composants électriques pour la commande de puissance est disposé côté inférieur sur la pièce centrale (12b), les barrettes à fiches (15, 16) établissant une liaison par fils avec les composants électriques des éléments de commande (12),
**que** l'élément porteur (17) recouvre de manière étanche au moins une ouverture de boîtier (21) dans la partie supérieure de boîtier (10) de l'aspirateur (1) vers le compartiment de ventilateur (3), au niveau de laquelle est disposée, en étant refroidie par le courant d'air sortant du ventilateur, l'électronique de commande (31) avec les radiateurs (32) de ses commutateurs de puissance, et que des connecteurs (28, 29) correspondants aux barrettes à fiches (15, 16) sont disposés dans le boîtier d'appareil (2), lesquels établissent la liaison par fils avec l'électronique de commande (31), le ventilateur aspirant (4), le tambour de câble et analogue à l'intérieur du boîtier d'appareil (2).

2. Aspirateur selon la revendication 1,
**caractérisé en ce**
**que** l'élément porteur (17) pour le recouvrement et l'étanchéité de l'ouverture de boîtier (21) vers le compartiment de ventilateur (3) est réalisé avec un épaulement marginal (23) conçu comme un couvercle avec joint périphérique (24).

3. Aspirateur selon la revendication 1 et 2,
**caractérisé en ce**
**que** les barrettes à fiches (15, 16) sont insérées sur l'élément porteur (17) dans des supports de fiches (26, 27) formés sur lui plongeant dans les ouvertures (21, 25), au moins la barrette à fiches (15) plongeant dans le compartiment de ventilateur (3) ainsi que, le cas échéant, d'autres composants électriques à refroidir de l'élément porteur (17) étant disposés à l'intérieur de la zone de couvercle entourée par le joint (24).

4. Aspirateur selon l'une ou plusieurs des revendications 1 à 3,
**caractérisé en ce**
**que** les barrettes à fiches (15, 16) sont insérées de manière inamovible et étanche dans les supports de fiches (26, 27).

5. Aspirateur selon l'une ou plusieurs des revendications 1 à 4,
**caractérisé en ce**
**que** les barrettes à fiches (15, 16) sont injectées dans les supports de fiches (26, 27).

6. Aspirateur selon l'une ou plusieurs des revendications 1 à 5,
**caractérisé en ce**
**que** les connecteurs (28, 29) sont disposés de manière amovible en face des barrettes à fiches (1.5, 16) dans des supports séparés (30) du compartiment de ventilateur (3) et du compartiment (5) pour le tambour de câble (6).

7. Aspirateur selon l'une ou plusieurs des revendications 1 à 6,
**caractérisé en ce**
**que** l'électronique de commande (31) est disposée sur une carte à circuit imprimé (33) montée de manière amovible sur le ventilateur aspirant (4), au moins les surfaces de refroidissement (32) des commutateurs de puissance étant disposées directement dans le courant d'air sortant du ventilateur aspirant (4).

8. Aspirateur selon l'une ou plusieurs des revendications 1 à 7,
**caractérisé en ce**
**qu'**une carte à circuit imprimé séparée pour d'éventuels autres composants électriques prévus sur la pièce centrale (12b) est disposée au-dessus de l'ouverture (21) vers le compartiment de ventilateur (3) sur l'élément porteur (17).

9. Aspirateur selon l'une ou plusieurs des revendications 1 à 8,
**caractérisé en ce**
**que** les autres composants sont injectés dans l'élément porteur (17).

10. Aspirateur selon l'une ou plusieurs des revendications 1 à 9,
**caractérisé en ce**
**que** le boîtier d'appareil (2) de l'aspirateur (1) se compose d'une partie supérieure de boîtier (10) présentant le sous-ensemble avec les éléments de commande (12) ainsi que d'une partie inférieure (8), laquelle est divisée par des parois de séparation (9) en un compartiment à poussière (7) pour le sac filtrant à poussière, un compartiment de ventilateur (3) et un compartiment (5) pour le tambour de câble (6), la partie supérieure de boîtier (10) posée dessus recouvrant de manière étanche les parois de séparation (9) et étant formée avec les ouvertures de boîtier (21, 25) pour les barrettes à fiches (15, 16).

11. Aspirateur selon l'une ou plusieurs des revendications 1 à 10,
**caractérisé en ce**
**que** le sous-ensemble avec les éléments de commande (12 ; 12a, 12b, 12c) est fixé de manière remplaçable sur la partie supérieure de boîtier (10).

12. Aspirateur selon l'une ou plusieurs des revendications 1 à 11,
**caractérisé en ce**
**que** les éléments de commande (12) réalisés sous forme de touches de commande sont encliquetés à la manière d'une bascule avec la pièce centrale commune (12b) du sous-ensemble.

13. Aspirateur selon l'une ou plusieurs des revendications 1 à 12,
**caractérisé en ce**
**que** la pièce centrale (12b) reliée à l'élément porteur (17) est équipée de différents composants électriques et/ou moyens de réglage de la vitesse (20), éléments d'affichage et analogues dans un but de variation du type d'appareil.

14. Aspirateur selon l'une ou plusieurs des revendications 1 à 13,
**caractérisé en ce**
**que** des pièces centrales (12b) de même largeur et même taille sont combinables avec des touches de commande (12a, 12c) de même largeur ou plus petites pour différentes gammes d'aspirateurs.

15. Aspirateur selon l'une ou plusieurs des revendications 1 à 14,
**caractérisé en ce**
**que** l'électronique de commande (31) est disposée avec ou sans organes de réglage de puissance (20) sur l'élément porteur (17) et que les ailettes de refroidissement (32) des commutateurs de puissance plongent à travers l'ouverture de boîtier (21) dans le courant d'air sortant du ventilateur aspirant (4) quand l'élément porteur (17) est monté.
